# EUROPEAN PATENT APPLICATION

(11) **EP 4 365 011 A1**
(43) Date of publication of application: **08.05.2024**
(21) Application number: 22831148.6
(22) Date of filing: 17.01.2022
(51) Int. Cl.: B60L 53/16, B60L 53/62, H02J 1/08

(54) **POWER DISTRIBUTION APPARATUS, CHARGING APPARATUS AND DEVICE, AND CONTROL METHOD AND SYSTEM**

(30) Priority: 02.07.2021 CN 202110753650
(71) Applicant: Xi'an TELD Intelligent Charging Technology Co., Ltd., Shaanxi 710075 (CN)
(72) Inventor: SUN, Jie, Shaanxi 710075 (CN); DU, Yunpeng, Shaanxi 710075 (CN); ZHAO, Qifan, Shaanxi 710075 (CN)
(74) Representative: Meissner Bolte Partnerschaft mbB
(86) International application number: PCT/CN2022/072271
(87) International publication number: WO 2023/273312

(57) **Abstract**

A power distribution apparatus, a charging apparatus and device, and a control method and system. According to the present application, second circuits are connected to first wiring ends between first switch groups which are adjacently connected, and the second circuits intersect at a second wiring end. Because of such a structural configuration, when the power distribution apparatus is actually applied to charging (a current input end is connected to a charging power unit, and a current output end is connected to a charging terminal), the number of the charging power units which can be directly called by each charging terminal is increased, so that the number of enabled switches is correspondingly reduced, and switch control logic is simplified, thereby reducing the programming amount, reducing a programming difficulty, and improving the programming efficiency.

## Description

This application claims the priority to Chinese Patent Application No. 202110753650.3, titled "POWER DISTRIBUTION APPARATUS, CHARGING APPARATUS AND DEVICE, AND CONTROL METHOD AND SYSTEM", filed on July 2, 2021 with the China National Intellectual Property Administration, which is incorporated herein by reference in its entirety.

### FIELD

The present disclosure relates to the technical field of power supplies for electric vehicles, and in particular to a power distribution device, a charging device, a power supply device, a control method and a control system.

### BACKGROUND

With the emerging vehicles especially electric vehicles (EV) powered by renewable energies, charging stations for the electric vehicles are increasing. The existing charging station generally includes charging guns, direct current contactors and charging power units. The charging power units convert the alternating current electricity inputted by the power grid into the direct current electricity, which is supplied to the electric vehicles. The charging guns, the direct current contactors and the charging power units are connected to form various branches arranged in an array. The branches each include one charging gun and multiple direct current contactors. Each of the multiple direct current contactors is connected to the charging power unit (as described in patent Application No. CN201520677685, for example). This kind of array topology is simple in structure. However, the large number of contactors result in high costs. In view of this, a ring topology as shown in Figure 1 (mentioned in Application No. CN202010337478.9) is proposed, and is commonly adopted in charging stations currently. In Figure 1, the charging station in the ring topology includes 6 charging power units (P1 to P6), 15 direct current contactors (K1 to K15) and 6 charging guns (M1 to M6, also known as the charging terminals). The available charging power unit is connected to the charging gun by switching on the corresponding contactor.

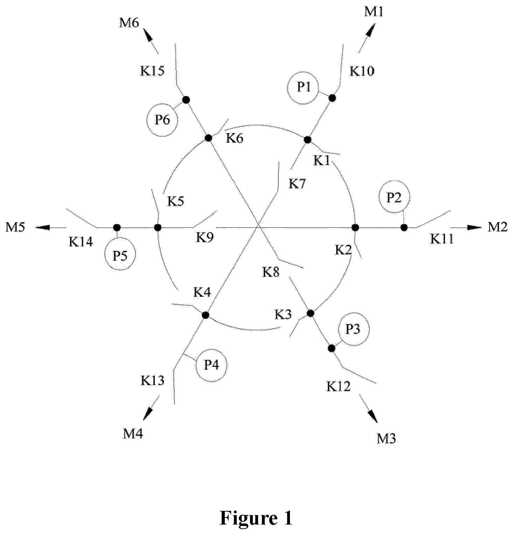

However, only a few charging power units in the charging station as shown in Figure 1 are directly connected to the charging gun, involving a large number of contactors. For example, only the charging power units P1, P2, P4, and P6 can be connected to the charging gun M1 directly, while the charging power units P3 and P5 have to be connected to the charging gun M1 indirectly across one charging power unit, involving in numerous contactors. The numerous contactors are controlled by an extremely complicated process, resulting in cumbersome and difficult programming, and consequently low efficiency.

Therefore, proposing a solution to the above technical problem by those skilled in the art is an urgent need at present.

### SUMMARY

A power distribution device, a charging device, a power supply device, a control method and a control system are provided. With the power distribution device (whose current input port connected to a charging power unit, and current output port connected to a charging terminal), each charging terminal can be connected to increased charging power units via few switches, greatly simplifying the control process. Accordingly, programming is simplified, thereby improving the efficiency.

The power distribution device according to the present disclosure includes a first loop and second branches. At least three first switch groups are serially connected at first joints on the first loop and each include first switch units. At least one current input port is connected between the first switch units. The second branches are connected to the first joints, respectively. The second branches intersect at a second joint. The second joint is not arranged on the first loop. At least one of the second branches is provided with a second switch group. The second switch group includes second switch units. At least one current input port is connected between the second switch units. The current input ports are connected to respective current output ports.

In some embodiments, the first switch groups are three in number.

In some embodiments, the second branches each are provided with the second switch group.

In some embodiments, the second branches are three in number and each are provided with the second switch group.

In some embodiments, the second switch units are two in number, and are connected between the corresponding first joint and the second joint.

In some embodiments, each of the second branches is formed by connecting the corresponding first joint and second joint.

In some embodiments, at least one of the second branches includes a first segment and a second segment. The first segment is formed by connecting the corresponding first joint and the second joint. The second segment extends from the first joint.

In some embodiments, at least one current input port is arranged on the second segment, and at least one second switch unit is arranged between the current input port and the first joint.

In some embodiments, at least one of the second branches includes a first segment, a second segment and a third segment. The first segment is formed by connecting the corresponding first joint and the second joint. The second segment extends from the first joint. The third segment extends from the second joint.

In some embodiments, at least one current input port is arranged on the second segment, and at least one second switch unit is arranged between the current input port and the first joint. At least one current input port is arranged on the third segment, and at least one second switch unit is arranged between the current input port and the second joint.

The charging device according to the present disclosure includes the power distribution device, and charging power units. The charging power units are connected to the current input ports, respectively.

The power supply device according to the present disclosure includes the charging device and charging terminals. The charging terminals connected to the current output ports, respectively. All the charging power units connected to the current input ports corresponding to the same switch group form a shared power module.

In some embodiments, the power supply device further includes third switch units. The current input ports are connected to the current output ports through the third switch units, respectively.

The control method according to the present disclosure is applied to the power supply device. The control method includes: determining a power module in closest proximity to a target terminal as a highest priority in terms of supplying power to the target terminal, where the target terminal is the charging terminal; determining a power module structurally opposite to the power module of the highest priority as a lowest priority in terms of supplying power to the target terminal, where remaining power modules are prioritized in terms of supplying power to the target terminal, in a preset order; determining a target power module from idle power modules based on a demanded power of the target terminal and in order of priorities in terms of supplying power to the target terminal, to be connected to the target terminal; and connecting the target power module to the target terminal by controlling corresponding switch units in the power supply device, to supply the demanded power to the target terminal.

In some embodiments, the determining the target power module from the idle power modules includes: determining the number of the target power module to be connected to the target terminal, based on the demanded power of the target terminal and the total number of the idle power modules, where power modules include the equal number of charging power units; and selecting the determined number of the target power module from the idle power modules, in order of priorities in terms of supplying power to the target terminal.

In some embodiments, the determining the number of the target power module to be connected to the target terminal includes: prioritizing the charging terminals in terms of receiving power, in a preset manner of setting priority; and determining numbers of power modules to be connected to the respective charging terminals based on demanded powers of the respective charging terminals and the total number of the idle power modules within a preset constraint. The preset constraint is to first fulfil the demanded power of the charging terminal of highest priority in terms of receiving power and assign at least one power module to each of charging terminals with nonzero demanded power.

In some embodiments, the selecting the determined number of the target power module from the idle power modules includes: for each of the charging terminals with nonzero demanded power, assigning the charging terminal the power module of highest priority in terms of supplying power to the charging terminal; and for each of the charging terminals with nonzero demanded power in descending order of priorities in terms of receiving power, selecting the determined number of the target power module form the remaining power modules in order of priorities in terms of supplying power to the charging terminal.

The control system according to the present disclosure is applied to the power supply device. The control system includes: a priority setting module, a power module determining module and a switch unit control module. The priority setting module is configured to determine a power module in closest proximity to a target terminal as a highest priority in terms of supplying power to the target terminal and determine a power module structurally opposite to the power module of the highest priority as a lowest priority in terms of supplying power to the target terminal. The target terminal is any one of the charging terminals. Remaining power modules are prioritized in terms of supplying power to the target terminal, in a preset order. The power module determining module is configured to determine a target power module from idle power modules based on a demanded power of the target terminal and in order of priorities in terms of supplying power to the target terminal, to be connected to the target terminal. The switch unit control module is configured to connect the target power module to the target terminal by controlling corresponding switch units in the power supply device, to supply power to the target terminal as demanded.

The power distribution device according to the present disclosure includes a first loop and second branches. At least three first switch groups are serially connected at first joints on the first loop and each include first switch units. At least one current input port is connected between the first switch units. The second branches are connected to the first joints, respectively. The second branches intersect at a second joint. The second joint is not arranged on the first loop. At least one of the second branches is provided with a second switch group. The second switch group includes second switch units. At least one current input port is connected between the second switch units. The current input ports are connected to respective current output ports. It can be seen that in the present application, the second branch is connected to the first joint between the adjacent first switch groups. All the second branches intersect at the second joint. Therefore, with the power distribution device (whose current input port connected to the charging power unit, and current output port connected to the charging terminal) in the above structure, each charging terminal can be connected to increased charging power units via few switches, greatly simplifying the control process. Accordingly, programming is simplified, thereby improving the efficiency.

The present disclosure also provides a charging device, a power supply device, a control method and a control system, which have the same beneficial effects as the above power distribution device.

### BRIEF DESCRIPTION OF THE DRAWINGS

In order to illustrate technical solutions in embodiments of the present disclosure more clearly, drawings to be used in the description of the embodiments or the conventional technology are introduced simply hereinafter. It is apparent that the drawings described below show only some embodiments of the present disclosure, and other drawings may be obtained by those skilled in the art based on the provided drawings without any creative effort.
Figure 1 is a schematic structural diagram illustrating a topology of an existing charging station;
Figure 2 is a schematic structural diagram illustrating a power distribution device according to an embodiment of the present disclosure;
Figure 3 is a schematic structural diagram illustrating the power distribution device according to another embodiment of the present disclosure;
Figure 4 is a schematic structural diagram illustrating the power distribution device according to another embodiment of the present disclosure;
Figure 5 is a schematic structural diagram illustrating the power distribution device according to another embodiment of the present disclosure;
Figure 6 is a schematic structural diagram illustrating a power supply system according to a first embodiment of the present disclosure;
Figure 7 shows a circuit diagram of the power supply system according to the first embodiment of the present disclosure;
Figure 8 is a schematic structural diagram illustrating the power supply system according to a second embodiment of the present disclosure;
Figure 9 shows a circuit diagram of the power supply system according to the second embodiment of the present disclosure;
Figure 10 is a flow chart illustrating a control method according to an embodiment of the present disclosure;
Figure 11 is a schematic structural diagram illustrating a control system according to an embodiment of the present disclosure; and
Figure 12 is a schematic structural diagram illustrating a power supply system according to an embodiment of the present disclosure.

### DETAILED DESCRIPTION

A power distribution device, a power supply device, a control method and a system are provided. With the power distribution device (whose current input port connected to the charging power unit, and current output port connected to the charging terminal), each charging terminal can be connected to increased charging power units via few switches, greatly simplifying the control process. Accordingly, programming is simplified, thereby improving the efficiency.

Technical solutions in the embodiments of the present disclosure are described below in conjunction with the drawings in the embodiments of the present disclosure, so that the objectives, technical solutions and advantages of the embodiments of the present disclosure are clear. Apparently, the embodiments described below are only some rather than all of the embodiments of the present disclosure. All other embodiments obtained by those skilled in the art based on the embodiments in the present disclosure without any creative effort shall fall within the protection scope of the present disclosure.

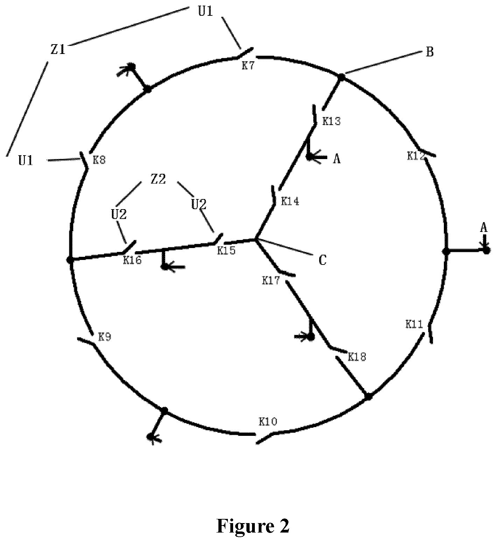

Reference is made to Figure 2, which is a schematic structural diagram illustrating the power distribution device according to an embodiment of the present disclosure.

The power distribution device includes current input ports A, a first loop, second branches, and current output ports respectively connected to the current input ports A. At least three first switch groups Z1 are serially connected at first joints B on the first loop. Each of the three first switch groups Z1 includes first switch units U1, at least one of the current input ports A is connected between the first switch units U1. The second branches are respectively connected to the first joints B. The second branches intersect at a second joint C which is not arranged on the first loop. At least one of the second branches is provided with a second switch group Z2. The second switch group Z2 includes second switch units U2, and at least another of the current input ports A is connected between the second switch units U2.

The power distribution device includes multiple current input outputs A and corresponding current output outputs. The current output outputs are connected to the current input outputs A, respectively. The current input terminal A is configured to connect a charging power unit. The current output terminal is configured to connect a charging terminal.

The power distribution device includes a first switch group Z1 and a second switch group Z2. The first switch group Z1 includes first switch units U1. At least one current input port A is connected between two adjacent first switch units U1. The second switch group Z2 includes second switch units U2. At least one current input end A is connected between two adjacent second switch units U2.

The number of the first switch group Z1 is at least three. The first switch groups Z1 are serially connected to form the first loop. The adjacent first switch groups Z1 are connected at a first joint B. The first joint B is connected to the responding second branch. The multiple second lines intersect at the second joint C. There is least one of the second branches on which at least one second switch group Z2 is arranged.

It should be noted that the second joint C is not arranged on the first loop. That is, the second joint C does not intersect with the first loop. The second joint C being not arranged on the first loop indicates that the second joint C is not directly connected to the first loop. As shown in Figure 2, the second joint C is indirectly connected to the first loop via the second switch group Z2 on the second branch. This example is the case that the second joint C is not arranged on the first loop.

It can be seen that in the present application, the second branch is connected to the first joint between the adjacent first switch groups. All the second branches intersect at the second joint. Therefore, with the power distribution device (whose current input port connected to the charging power unit, and current output port connected to the charging terminal) in the above structure, each charging terminal can be connected to increased charging power units via few switches, greatly simplifying the control process. Accordingly, programming is simplified, thereby improving the efficiency.

In some embodiments, the first switch groups Z1 is three in number. Alternatively, the first switch groups Z1 is more than three in number. The number of the first switch group Z1 is not limited herein.

In some embodiments, the power distribution device includes multiple second branches, on which at least one second switch group Z2 is arranged.

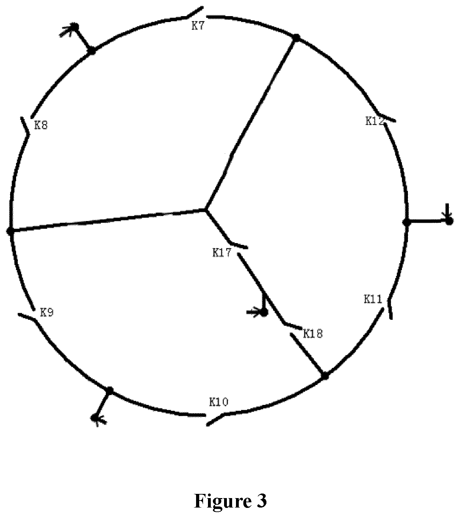

In some embodiments, the power distribution device includes three first switch group Z1, and three second branches, on at least one of which at least one second switch group Z2 is arranged, as shown in Figure 3.

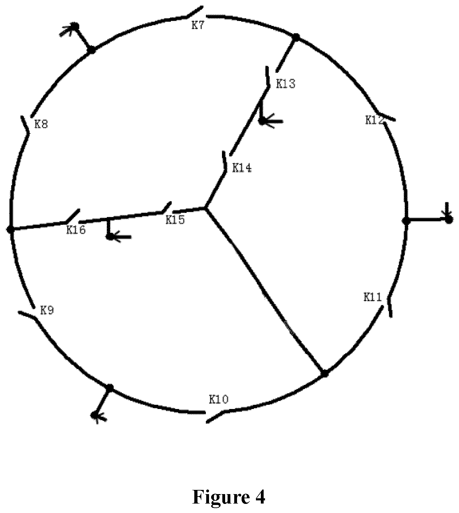

In some embodiments, the power distribution device includes three first switch group Z1, and three second branches, on only one of which at least one second switch group Z2 is arranged, as shown in Figure 3. In other embodiments, the power distribution device includes three first switch group Z1, and three second branches, on two of which at least one second switch group Z2 is arranged, as shown in Figure 4. In preferable embodiments, the power distribution device includes three first switch group Z1, and three second branches, on each of which at least one second switch group Z2 is arranged, as shown in Figure 2.

In some embodiments, the second switch group Z2 includes two second switch units U2. At least one current input end A is connected between the two second switch units U2. The two second switch units U2 are connected between the corresponding first joint B and the second joint C.

In some embodiments, the second switch group Z2 includes multiple second switch units U2. At least one current input end A is connected between two adjacent second switch units U2. The two adjacent second switch units U2 are connected between the first joint B and the second joint C.

In some embodiments, the second branches are formed by connecting the respective first joints B and the second joint C.

As shown in Figures 2 to 4, each second branch is formed by connecting the corresponding first joint B and the second joint C. That is, the first joint B serves as one end of the second branch, and the second joint C serves as the other end of the second branch.

In some embodiments, at least one of the second branches includes a first segment and a second segment. The first segment is formed by connecting the corresponding first joint B and the second joint C. The second segment extends from the first joint B.

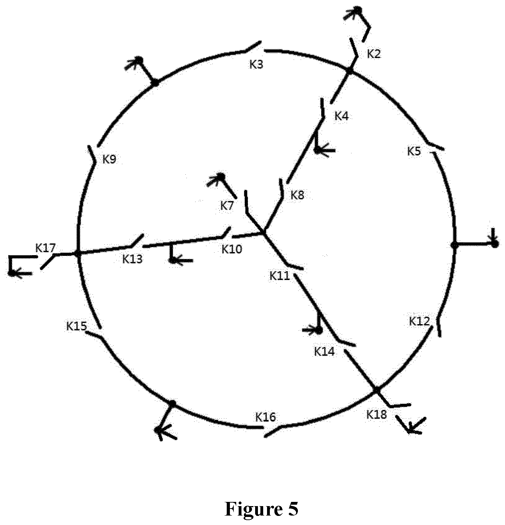

As shown in Figure 5, two of the second branches include a first segment and a second segment, each. The first segment is formed by connecting the corresponding first joint B and the second joint C. The second segment extends from the first joint B.

It should be noted that the second segment extends from the first joint B in a direction not limited herein, as long as the second segment dose not interact with another circuit.

In some embodiments, at least one of the second branches include a first segment and a second segment. At least one current input port A is arranged on the second segment. At least one second switch unit U2 is arranged between the current input port A and the first joint B.

As shown in Figure 5, the three second branches each include a first segment and a second segment. At least one current input port A (for connecting a charging power unit) is arranged on the second segment. At least one second switch unit U2 is arranged between the current input port A and the first joint B.

In some embodiments, at least one second branch includes a first segment, a second segment and a third segment. The first segment is formed by connecting the corresponding first joint B and the second joint C. The second segment extends from the first joint B. The third segment extends from the second joint C.

As shown in Figure 5, only one second branch includes a first segment, a second segment and a third segment. The first segment is formed by connecting the corresponding first joint B and the second joint C. The second segment extends from the first joint B. The third segment extends from the second joint C.

It should be noted that the second segment extends from the first joint B in a direction not limited herein, as long as the second segment dose not interact with another circuit. The third segment extends from the second joint C in a direction not limited herein, as long as the third segment dose not interact with another circuit.

In some embodiments, at least one current input port A is arranged on the second segment. At least one second switch unit U2 is arranged between the current input port A and the first joint B. At least one current input port A is arranged on the third segment. At least one second switch unit U2 is arranged between the current input port A and the second joint C. As shown in Figure 5, only one second branch includes a first segment, a second segment and a third segment. At least one current input port A (for connecting a charging power unit) is arranged on the second segment. At least one second switch unit U2 is arranged between the current input port A and the first joint B. Similarly, at least one current input port A (for connecting a charging power unit) is arranged on the third segment. At least one second switch unit U2 is arranged between the current input port A and the second joint C.

A charging device is further provided according to the present application. The charging device includes the power distribution device as described above, and a charging power unit. The charging power unit is connected to the current input port A.

The charging device in the present application includes the power distribution device and a charging power unit. The charging power unit is connected to the current input port A in the power distribution device. The current input port A in the power distribution device is connected to one charging power unit. Alternatively, the current input port A is connected to multiple charging power units. Alternatively, the current input port A is connected to no charging power unit. This is not limited herein.

Details about the power distribution device in the charging device can refer to the above embodiments, and are not repeated here.

A power supply device is further provided according to the present application. The power supply system includes the charging device as described above and a charging terminal. The charging terminal is connected to the current output port. All the charging power units connected to the current input ports A corresponding to the switch group form a shared power module.

The power supply device in the present application includes the charging device and the charging terminal (for example, a charging gun). The charging terminal is connected to the current output port in the power distribution device. In the power distribution device, one current output port is connected to one charging terminal or multiple current output ports are connected to the same charging terminal, which is not limited in the present application.

It should be noted that all the charging power units connected to the current input ports A corresponding to the same switch group form a power module. For example, the first switch group Z1 includes two first switch units U1, and at least one current input port A is connected between the two first switch units U1. Therefore, all the charging power units connected to the at least one current input port A form a power module. The second switch group Z2 includes two second switch units U2, and at least one current input port A is connected between the two second switch units U2. Therefore, all the charging power units connected to the at least one current input port A form a power module.

In some embodiments, the power supply system further includes a third switch unit U3. The current input port A is connected to the current output port through the third switch unit U3.

In addition, the power supply system includes the third switch unit U3. The current input port A is connected to the current output port through at least one third switch unit U3.

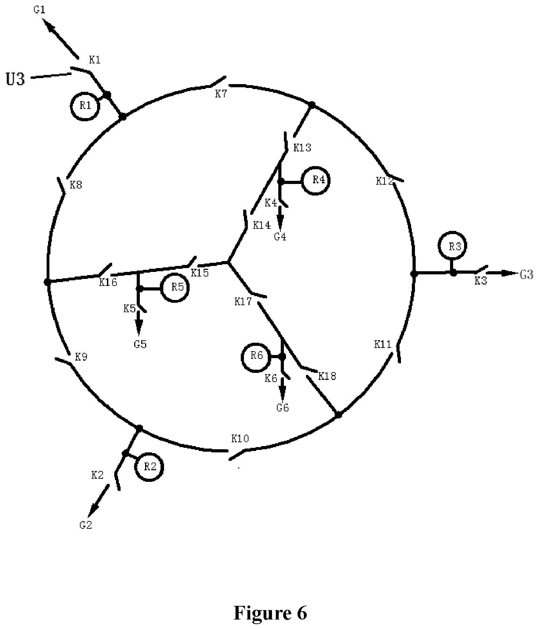

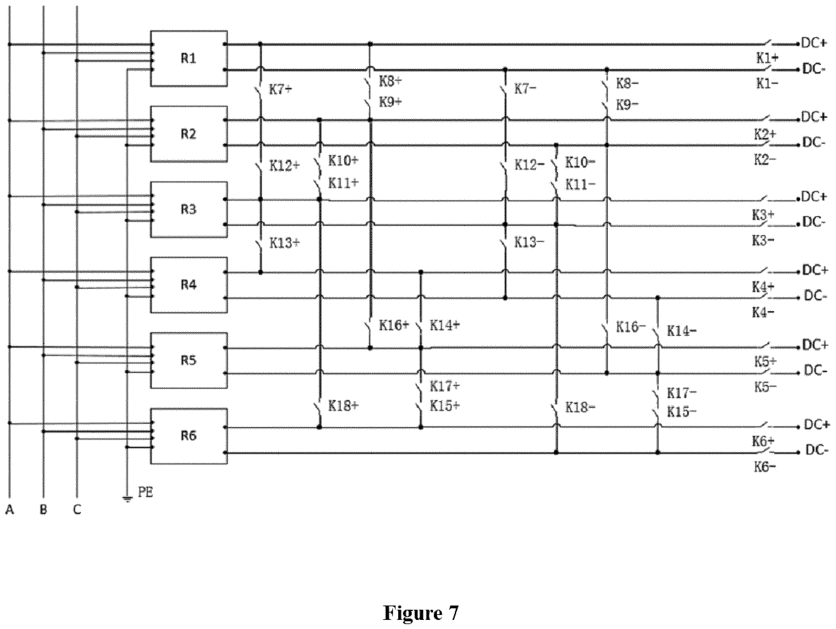

Figure 6 illustrates the power supply system. Figure 7 shows a circuit diagram of the power supply system as shown in Figure 6. The power supply system includes 6 charging terminals (represented as "G"), 6 power modules (represented as "R") and 18 switch units (represented as "K"). It should be noted that each switch unit includes two switches respectively denoted as + and -. For example, the first switch unit K1 includes two switches K1+ and K1- (where other switch units are similar to the first switch unit K1 and thus are not detailed).

In the power supply system as shown in Figure 6, each charging terminal can be connected to 5 power modules directly. For example, the charging terminal G1 can be connected to the power modules R1, R2, R3, R4 and R5. The power modules directly connected to one charging terminal as shown in Figure 6 are increased in number compared with the charging station equipped with 6 charging guns as shown in Figure 1. That is, each charging terminal can be connected to increased charging power units via few switches, greatly simplifying the control process. Accordingly, programming is simplified, thereby improving the efficiency.

Moreover, there is failure of the charging gun to connect to a charging power unit in the charging station as shown in Figure 1 in some operating conditions. For example, the charging guns M3 and M5 fail to connect to the charging power unit P1 when the charging guns M2 to M6 are in operation and the charging gun M1 is idle. The charging gun M3 fails to connect to the charging power units P1 and P5 when the charging guns M2, M3, M4 and M6 are in operation and the charging guns M1 and M5 are idle. The charging guns M4 and M6 fail to connect to the charging power unit P2 and the charging guns M1 and M3 fail to connect to the charging power unit P5 when the charging guns M1, M3, M4 and M6 are in operation and the charging guns M2 and M5 are idle. As a result, the charging power units fail to be fully used. With the power supply system according to the present application, the charging power units can be fully used due to the above improvements in structure. In the power supply system as shown in Figure 6, the power module R5 fails to connect to only the charging terminal G3 when the charging terminal G5 is idle and the charging terminals G1, G2, G3, G4 and G6 are in operation.

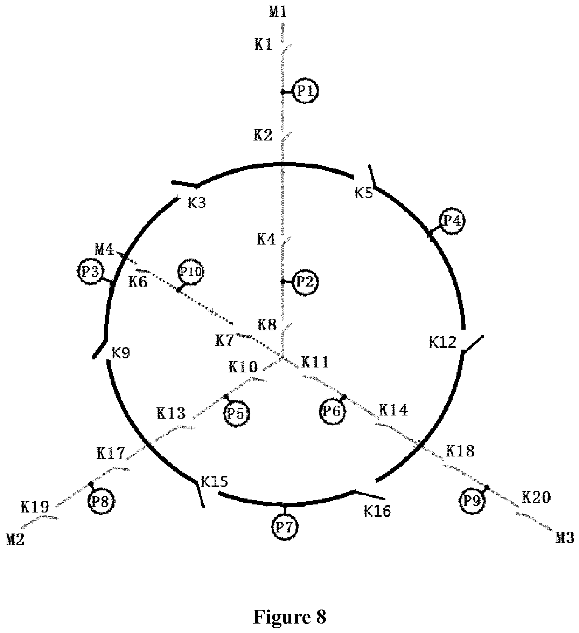

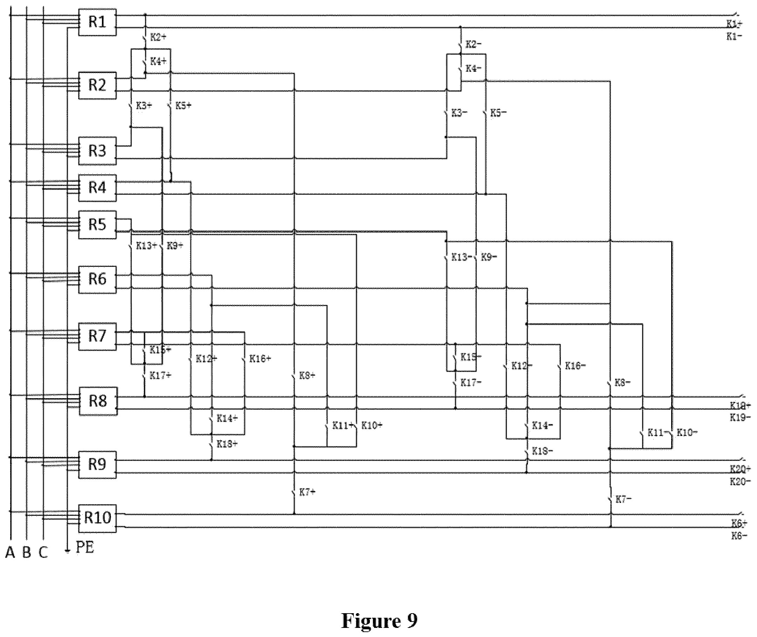

In some embodiments, the power supply system is as shown in Figure 8. Figure 9 shows a circuit diagram of the power supply system as shown in Figure 8. The power supply system includes 4 charging terminals (represented as "M"), 10 power modules (represented as "P") and 20 switch units (represented as "K").

Details about the charging device in the power supply system can refer to the above embodiments, and are not repeated here.

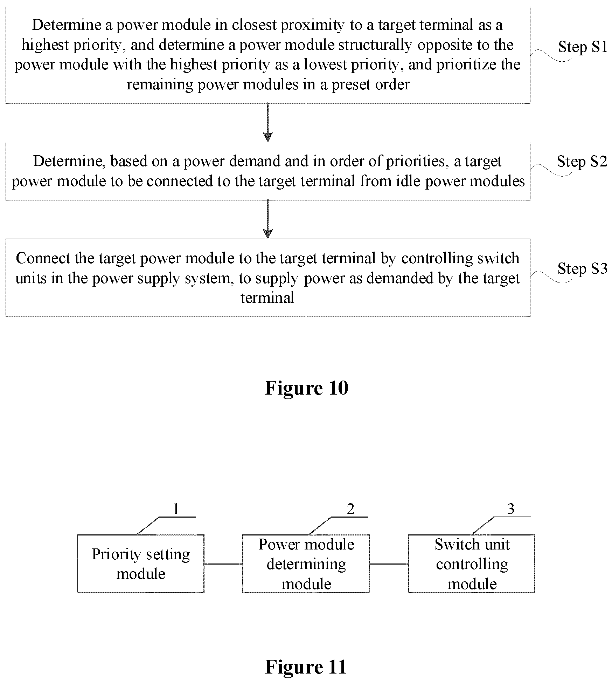

Reference is made to Figure 10, which is a flowchart illustrating a control method according to an embodiment of the present disclosure.

The control method is applied to the power supply system according to any one of the above embodiments (as shown in Figure 6 for example). The control method includes the following step S1 to S3.

In step S 1, a power module in closest proximity to a target terminal is determined as a highest priority in terms of supplying power to the target terminal. A power module structurally opposite to the power module of the highest priority is determined as a lowest priority in terms of supplying power to the target terminal. The remaining power modules are prioritized in terms of supplying power to the target terminal, in a preset order.

In the present application, the power modules are prioritized for each charging terminal. That is, for each charging terminal, which power module is to be connected to the charging terminal first is predetermined. The power module a high priority is connected to the target terminal (which may be any terminal) first. For example, a power module in closest proximity to the target terminal is determined as the highest priority. A power module structurally opposite to the power module with the highest priority is determined as a lowest priority. The remaining power modules are prioritized in a preset order.

In the present application, the respective first power modules connected to the first switch groups are numbered counterclockwise along the first loop. The respective second power modules connected to the second switch groups are numbered counterclockwise following the respective first joints along the first loop. The first power modules from the second power modules are numbered in ascending order. The second power module opposite to the first power module, to which the smallest serial number is assigned, is numbered the largest serial number. For the target terminal, the power modules, except for the power module of highest priority and the power module of lowest priority, are prioritized in descending order of their serial numbers (or in ascending order of supplied powers). That is, the power module numbered the larger serial number is of lower priority (or the power module suppling more power is of larger priority).

As shown in Figure 6, the power modules R1, R2 and R3 connected to the respective first switch groups are numbered counterclockwise along the first loop. The power module R1 is numbered 1. The power module R2 is numbered 2. The power module R3 is numbered 3. The power modules R4, R5 and R6 connected to the respective second switch groups are numbered counterclockwise following the respective first joints along the first loop. The power module R4 is numbered 4. The power module R5 is numbered. The power module R6 is numbered 6. The power module R1 is in closest proximity to the charging terminal G1. The power module R2 is in closest proximity to the charging terminal G2. The power module R3 is in closest proximity to the charging terminal G3. The power module R4 is in closest proximity to the charging terminal G4. The power module R5 is in closest proximity to the charging terminal G5. The power module R6 is in closest proximity to the charging terminal G6. The power module R1 is structurally opposite to the power module R6. The power module R2 is structurally opposite to the power module R4. The power module R3 is structurally opposite to the power module R5.

For the charging terminal G1, the power module R1 is of highest priority, the power module R6 is of lowest priority, and the power modules R2, R3, R4 and R5 are in descending order of priorities in terms of supplying power. For the charging terminal G2, the power module R2 is of highest priority, the power module R4 is of lowest priority, and the power modules R1, R3, R5 and R6 are in descending order of priorities in terms of supplying power. For the charging terminal G3, the power module R3 is of highest priority, the power module R5 is of lowest priority, and the power modules R1, R2, R4 and R6 are in descending order of priorities in terms of supplying power. For the charging terminal G4, the power module R4 is of highest priority, the power module R2 is of lowest priority, and the power modules R1, R3, R5 and R6 are in descending order of priorities in terms of supplying power. For the charging terminal G5, the power module R5 is of highest priority, the power module R3 is of lowest priority, and the power modules R1, R2, R4 and R6 are in descending order of priorities in terms of supplying power. For the charging terminal G6, the power module R6 is of highest priority, the power module R1 is of lowest priority, and the power modules R2, R3, R4 and R5 are in descending order of priorities in terms of supplying power. The details are as shown in the following table 1.

**Table 1**

| Charging terminal | Number of corresponding power modules | Priorities in terms of supplying power | Path of switch units |
|---|---|---|---|
| G1 | 6 | R1, R2, R3, R4, R5, R6 | K1-K8-K9-K7-K12-K13-K16-K10-K18 |
| G2 | 6 | R2, R1, R3, R5, R6, R4 | K2-K9-K8-K10-K11-K16-K18-K12-K13 |
| G3 | 6 | R3, R1, R2, R4, R6, R5 | K3-K8-K9-K10-K11-K12-K13-K18-K16 |
| G4 | 6 | R4, R1, R3, R5, R6, R2 | K4-K7-K13-K12-K14-K15-K17-K10-K18 |
| G5 | 6 | R5, R1, R2, R4, R6, R3 | K5-K8-K16-K9-K15-K14-K17-K18-K11 |
| G6 | 6 | R6, R2, R3, R4, R5, R1 | K6-K10-K18-K11-K17-K14-K15-K8-K9 |

In step S2, a target power module to be connected to the target terminal is determined from idle power modules, based on a demanded power of the target terminal and in order of priorities in terms of supplying power to the target terminal.

In the present application, based on the demanded power of the target terminal, the target power module to be connected to the target terminal is determined from idle power modules, in order of priorities in terms of supplying power to the target terminal.

In step S3, the target power module is connected to the target terminal by controlling corresponding switch units in the power supply device, to supply the demanded power to the target terminal.

In the present application, the target power module, after selected from the idle power modules, is connected to the target terminal by controlling switch units in the power supply device, to supply power to the target terminal as demanded.

In some embodiments, the target power module to be connected to the target terminal is selected from the idle power modules based on the demanded power of the target terminal and in order of priorities as follows. The number of target power module to be connected to the target terminal is determined based on the demanded power of the target terminal and the total number of the idle power modules. The power modules include the equal number of charging power units. The determined number of the target power module is selected from the idle power modules in order of priorities in terms of supplying power to the target terminal.

In the present application, the number of power modules to be connected to the target terminal is determined based on the demanded power of the target terminal and the total number of the idle power modules. The power modules include the equal number of charging power units, and therefore supply equal amount of power. It should be understood that, when the amount of power that each power module supplies is known, the number of power modules to be connected to the target terminal can be determined based on the demanded power of the target terminal and the total number of the idle power modules (to meet the demanded power of the target terminal as much as possible with the determined number of power modules to be connected to the target terminal not exceeding the total number of the idle power modules).

Then, the determined number of the target power modules are selected from the idle power modules in order of priorities, for use by the target terminal.

In some embodiments, the number of power modules to be connected to the target terminal is determined based on the demanded power of the target terminal and the total number of the idle power modules as follows. The charging terminals are prioritized in terms of receiving power, in a preset manner of setting priority. The numbers of power modules to be connected to respective charging terminals are determined based on the demanded powers of the respective charging terminals and the total number of the idle power modules within a preset constraint. The preset constraint is to fulfil the demanded power of the charging terminal of highest priority in terms of receiving power first and assign at least one power module to each charging terminal with nonzero demanded power.

In some embodiments, the preset manner of setting priority is that the charging terminal first connected to a device to be charged (e.g., an electric vehicle) is of high priority, and therefore its demanded power is met first. In some embodiments, the charging terminals are pre-prioritized in constant order.

In the present application, the charging terminals are prioritized in the preset manner of setting priority. The numbers of power modules to be connected to respective charging terminals are determined based on the demanded powers of the respective charging terminals and the total number of the idle power modules within the preset constraint of meeting the demanded power of the charging terminal of highest priority first and assigning at least one power module to each charging terminal with nonzero demanded power.

In some embodiments, the determined number of the target power module is selected from the idle power modules in order of priorities as follows. For each of the charging terminals with nonzero demanded power, the charging terminal is assigned the power module of highest priority in terms of supplying power to the charging terminal. Then, for each of the charging terminals with nonzero demanded power in descending order of priorities in terms of receiving power, the determined number of the power module is selected form the remaining power modules in order of priorities in terms of supplying power to the charging terminal.

In the present application, charging terminals with nonzero demanded power are first assigned the power modules of highest priority, respectively. Subsequently, for each of the charging terminals with nonzero demanded power in descending order of priorities in terms of receiving power, the determined number of the power module is selected form the remaining power modules in descending order of priorities in terms of supplying power.

For example, the charging terminal G1 is prioritized over the charging terminal G2 in terms of receiving power, and the charging terminals G1 and G2 both have nonzero demanded powers. The charging terminal G1 is assigned the power module R1 that is of highest priority for the charging terminal G1, and the charging terminal G2 is assigned the power module R2 that is of highest priority for the charging terminal G2. Subsequently, the determined number of the power module for the charging terminal G1 is selected form the remaining power modules (that is, excluding the power modules R1 and R2) in descending order of priorities in terms of supplying power, and then the determined number of the power module for the charging terminal G2 is selected form the remaining power modules (that is, excluding the power modules that have been connected to the respective charging terminals) in descending order of priorities in terms of supplying power. Details are as shown in the following table 2.

**Table 2**

| Operating condition | Number of power modules to be assigned | Charging terminal | Priorities in terms of supplying power | Path of switch units |
|---|---|---|---|---|
| G1+G2 | 5+1 | G1 | R1, R3, R4, R5, R6 | K1-K7-K12-K13-K8-K16-K15-K17 |
| | | G2 | R2 | K2 |
| G1+G2 | 4+2 | G1 | R1, R3, R4, R5 | K1-K7-K12-K13-K8-K16 |
| | | G2 | R2, R6 | K2-K9-K16 |
| G1+G2 | 3+3 | G1 | R1, R3, R4 | K1-K7-K12-K13 |
| | | G2 | R2, R5, R6 | K2-K9-K16-K10-K18 |
| G1+G2 | 2+4 | G1 | R1, R3 | K1-K7-K12 |
| | | G2 | R2, R5, R6, R4 | K2-K9-K16-K10-K18-K17-K14 |
| G1+G2 | 1+5 | G1 | R1, | K1 |
| | | G2 | R2, R3, R5, R6, R4 | K2-K10-K11-K9-K16-K18-K17-K14 |

Further, in the present application, the number of power module to be disconnected form the target terminal is determined based on a decrement by which the demanded power of the target terminal is decreased. Then, the determined number of power module is disconnected form the target terminal in ascending order of priorities in terms of supplying power to the target terminal, by controlling the corresponding switch units.

For example, the charging terminal G1 has nonzero demanded power and is assigned 6 power modules, as shown in the first row G1 in table 1 above. That is, the charging terminal G1 is assigned the 6 power modules R1, R2, R3, R4, R5 and R6. When the demanded power of charging terminal G1 is decreased, the number of power module to be disconnected from the charging terminal G1 is determined based on the decrement by which the demanded power of the target terminal is decreased. Then, the determined number of power module is disconnected form the target terminal G1 in ascending order of priorities in terms of supplying power to the target terminal G1, by controlling the corresponding switch units. For example, 2 power module is determined to be disconnected from the charging terminal G1, and therefore the power modules R5 and R6 are disconnected from the charging terminal G1 by controlling the corresponding switch units.

In addition, in the present application, it is determined whether there is a charging terminal whose demanded power is not met in the power supply device when there is an idle power module. The charging terminals, whose respective demanded powers are not met, are prioritized in terms of receiving power, in the preset manner of setting priority, and then are assigned the idle power modules in ascending order of priorities in terms of receiving power by controlling the corresponding switch units, until respective demanded powers of all the charging terminals are fulfilled. The switch units are switched off when all the charging terminals are fully charged, and then the power modules are idle.

Reference is made to Figure 11, which is a schematic structural diagram illustrating a control system according to an embodiment of the present disclosure.

The control system is applied to the power supply device according to the above embodiments. The control system includes a priority setting module 1, a power module determining module 2, and a switch unit controlling module.

The priority setting module 1 is configured to determine a power module in closest proximity to a target terminal as a highest priority in terms of supplying power to the target terminal, and determine a power module structurally opposite to the power module of the highest priority as a lowest priority in terms of supplying power to the target terminal. The target terminal is a charging terminal in the power supply device. The remaining power modules are prioritized in terms of supplying power to the target terminal, in a preset order.

The power module determining module 2 is configured to determine, based on a demanded power of the target terminal and in order of priorities in terms of supplying power to the target terminal, a target power module from idle power modules, to be connected to the target terminal.

The switch unit control module 3 is configured to connect the target power module is connected to the target terminal by controlling corresponding switch units in the power supply device, to supply the demanded power to the target terminal.

Details about the control system in the present application can refer to the above embodiments of the control method, and are not repeated here.

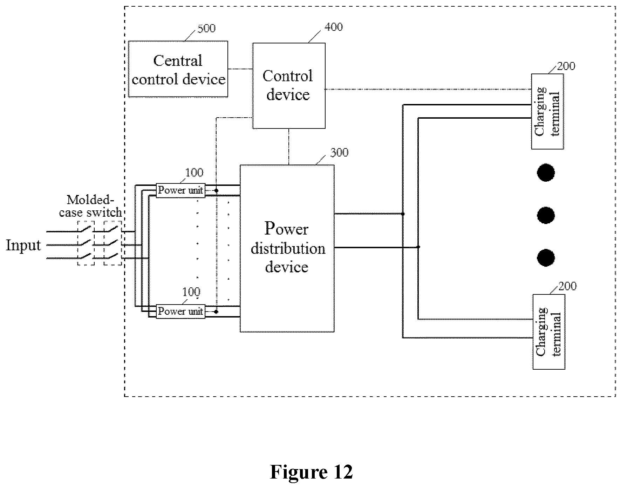

Reference is made to Figure 12, which is a schematic structural diagram illustrating a power supply system according to an embodiment of the present disclosure.

The power supply system includes multiple power units 100 (that is, the above charging power units), multiple charging terminals 200, a power distribution device 300, a control device 400, and a central control device 500. The central control device 500 is capable of charging control, order management, local billing, and uploading data to a cloud platform. The control device 400 is configured to implement the control method by executing stored computer program.

Details about the power distribution device 300 in the power supply system can refer to the above power distribution device, and therefore are not described herein. The control device 400 in the power supply system provided can refer to the above embodiments of the control method, and therefore are not described herein.

It should further be noted that relative terms such as first and second are only used herein to distinguish one entity or operation from another, instead of necessitating or implying such actual relationship or order between entities or operations. Furthermore, the term "comprises", "includes" or any other variation thereof is intended to be non-exclusive such that a process, method, article, or device including a set of elements includes not only those elements, but also elements not expressly listed, or elements inherent in such process, method, article, or device. Without further limitations, an element defined by the phrase "comprising/including a ..." does not exclude the presence of additional identical elements in the process, method, article or device including the said element.

The disclosed embodiments are described above so that those skilled in the art can implement or use the present disclosure. Various modifications to these embodiments can be readily made by those skilled in the art, and the general principles defined herein may be implemented in other embodiments without departing from the spirit or scope of the present disclosure. Therefore, the present disclosure should accord with the widest scope consistent with the principles and novel features disclosed herein instead of being limited to the embodiments shown herein.

## Claims

1. A power distribution device, comprising:
a first loop, wherein at least three first switch groups are serially connected at first joints on the first loop and each comprise first switch units, and at least one current input port is connected between the first switch units; and
second branches, respectively connected to the first joints, wherein the second branches intersect at a second joint, and the second joint is not arranged on the first loop, at least one of the second branches is provided with a second switch group, the second switch group comprises second switch units, at least one current input port is connected between the second switch units, and the current input ports are connected to respective current output ports.

2. The power distribution device according to claim 1, wherein
the first switch groups are three in number.

3. The power distribution device according to claim 2, wherein
the second branches each are provided with the second switch group.

4. The power distribution device according to claim 3, wherein
the second branches are three in number and each are provided with the second switch group.

5. The power distribution device according to any one of claims 1 to 4, wherein
the second switch units are two in number, and are connected between the corresponding first joint and the second joint.

6. The power distribution device according to claim 5, wherein
each of the second branches is formed by connecting the corresponding first joint and second joint.

7. The power distribution device according to claim 5, wherein
at least one of the second branches comprises a first segment and a second segment, wherein the first segment is formed by connecting the corresponding first joint and the second joint, and the second segment extends from the first joint.

8. The power distribution device according to claim 7, wherein
at least one current input port is arranged on the second segment, and at least one second switch unit is arranged between the current input port and the first joint.

9. The power distribution device according to claim 5, wherein
at least one of the second branches comprises a first segment, a second segment and a third segment, wherein the first segment is formed by connecting the corresponding first joint and the second joint, the second segment extends from the first joint, and the third segment extends from the second joint.

10. The power distribution device according to claim 9, wherein
at least one current input port is arranged on the second segment, and at least one second switch unit is arranged between the current input port and the first joint; and
at least one current input port is arranged on the third segment, and at least one second switch unit is arranged between the current input port and the second joint.

11. A charging device, comprising:
the power distribution device according to any one of claims 1 to 10; and
charging power units connected to the current input ports, respectively.

12. A power supply device, comprising:
the charging device according to claim 11; and
charging terminals connected to the current output ports respectively, wherein all the charging power units connected to the current input ports corresponding to the same switch group form a shared power module.

13. The power supply device according to claim 12, further comprising:
third switch units, wherein the current input ports are connected to the current output ports through the third switch units, respectively.

14. A control method, applied to the power supply device according to claim 12 or 13, and comprising:
determining a power module in closest proximity to a target terminal as a highest priority in terms of supplying power to the target terminal, wherein the target terminal is one of the charging terminals;
determining a power module structurally opposite to the power module of the highest priority as a lowest priority in terms of supplying power to the target terminal, wherein remaining power modules are prioritized in terms of supplying power to the target terminal, in a preset order;
determining a target power module from idle power modules based on a demanded power of the target terminal and in order of priorities in terms of supplying power to the target terminal, to be connected to the target terminal; and
connecting the target power module to the target terminal by controlling corresponding switch units in the power supply device, to supply the demanded power to the target terminal.

15. The control method according to claim 14, wherein the determining the target power module from the idle power modules comprises:
determining the number of the target power module to be connected to the target terminal, based on the demanded power of the target terminal and the total number of the idle power modules, wherein power modules comprise the equal number of charging power units; and
selecting the determined number of the target power module from the idle power modules, in order of priorities in terms of supplying power to the target terminal.

16. The control method according to claim 15, wherein the determining the number of the target power module to be connected to the target terminal comprises:
prioritizing the charging terminals in terms of receiving power, in a preset manner of setting priority; and
determining numbers of power modules to be connected to the respective charging terminals based on the demanded power of the respective charging terminals and the total number of the idle power modules within a preset constraint, wherein the preset constraint is to first fulfil the demanded power of the charging terminal of highest priority in terms of receiving power and assign at least one power module to each of charging terminals with nonzero demanded power.

17. The control method according to claim 16, wherein the selecting the determined number of the target power module from the idle power modules comprises:
for each of the charging terminals with nonzero demanded power, assigning the charging terminal the power module of highest priority in terms of supplying power to the charging terminal; and
for each of the charging terminals with nonzero demanded power in descending order of priorities in terms of receiving power, selecting the determined number of the target power module form the remaining power modules in order of priorities in terms of supplying power to the charging terminal.

18. A control system, applied to the power supply device according to claim 12 or 13, and comprising:
a priority setting module configured to determine a power module in closest proximity to a target terminal as a highest priority in terms of supplying power to the target terminal and determine a power module structurally opposite to the power module of the highest priority as a lowest priority in terms of supplying power to the target terminal, wherein the target terminal is any one of the charging terminals, and remaining power modules are prioritized in terms of supplying power to the target terminal, in a preset order;
a power module determining module configured to determine a target power module from idle power modules based on a demanded power of the target terminal and in order of priorities in terms of supplying power to the target terminal, to be connected to the target terminal; and
a switch unit control module configured to connect the target power module to the target terminal by controlling corresponding switch units in the power supply device, to supply the demanded power to the target terminal.
